# EUROPÄISCHE PATENTANMELDUNG

(11) **EP 3 388 590 A1**
(43) Veröffentlichungstag der Anmeldung: **17.10.2018**
(21) Anmeldenummer: 18165166.2
(22) Anmeldetag: 29.03.2018
(51) Int. Cl.: E03F 5/10, E03F 5/14, E03F 7/00, F28D 21/00

(54) **ABWASSERWÄRMENUTZUNGSVORRICHTUNG, VERFAHREN ZUM NUTZEN VON ABWASSERWÄRME AUS ABWASSERKANÄLEN UND VERFAHREN ZUM AUSTAUSCH ODER NACHRÜSTEN EINES BESTEHENDEN KANALSCHACHTES**

(30) Priorität: 12.04.2017 DE 102017107968
(71) Anmelder: KUBRA Kunststoff-Systemtechnik GmbH, 06785 Oranienbaum-Wörlitz, OT Kapen (DE)
(72) Erfinder: Brabender, Udo, 06847 Dessau-Roßlau (DE); Koschorreck, Andreas, 15732 Eichwalde (DE)
(74) Vertreter: Weidner Stern Jeschke

(57) **Zusammenfassung**

Die Erfindung betrifft eine Abwasserwärmenutzungsvorrichtung zum Nutzen von Abwasserwärme aus Abwasserkanälen, wobei die Abwasserwärmenutzungsvorrichtung (100, 200) einen Kanalschacht (101, 201, 203, 205, 207, 209) mit einem Gerinne (111, 211), einen Sammelraum (115), eine Fördereinrichtung (121, 221, 222), einen Speicherbehälter (123, 223, 224) und eine Rohrleitung (117, 137, 139) aufweist, und der Abwasserwärmenutzungsvorrichtung eine Wärmenutzungseinrichtung zuordenbar ist, wobei die Abwasserwärmenutzungsvorrichtung eine Entnahmeeinrichtung (113) zum Entnehmen und zum Überführen von Abwasser aus dem Gerinne in den Sammelraum aufweist, wobei die Entnahmeeinrichtung als ein Teilstück des Gerinnes innerhalb des Kanalschachtes angeordnet ist, sodass im wesentlichen ein freier Querschnitt des Gerinnes erhalten bleibt und im Kanalschacht Abwasser über die Entnahmeeinrichtung zum Sammelraum und vom Sammelraum durch die Rohrleitung mittels der Fördereinrichtung zum Speicherbehälter und/oder über die Wärmenutzungseinrichtung förderbar ist. Des Weiteren betrifft die Erfindung ein Verfahren zum Nutzen von Abwasserwärme aus Abwasserkanälen und ein Verfahren zum Austausch oder Nachrüsten eines bestehenden Kanalschachtes zu einer Abwasserwärmenutzungsvorrichtung.

## Beschreibung

Die Erfindung betrifft eine Abwasserwärmenutzungsvorrichtung zur Nutzung von Abwasserwärme aus Abwasserkanälen, wobei die Abwasserwärmenutzungsvorrichtung einen Kanalschacht mit einem Gerinne, einen Sammelraum, eine Fördereinrichtung, einen Speicherbehälter und eine Rohrleitung aufweist, und der Abwasserwärmenutzungsvorrichtung eine Wärmenutzungseinrichtung zuordenbar ist. Des Weiteren betrifft die Erfindung ein Verfahren zum Nutzen von Abwasserwärme aus Abwasserkanälen und ein Verfahren zum Austausch oder Nachrüsten eines bestehenden Kanalschachtes zu einer Abwasserwärmenutzungsvorrichtung.

Täglich werden Millionen Kubikmeter Wasser für die häusliche Verwendung und für gewerbliche und industrielle Zwecke erwärmt und nach einmaliger Nutzung in das Kanalisationssystem als Abwasser abgegeben. Das in die Kanalisation abgegebene Abwasser weist im Jahresmittel eine Temperatur von 10°C bis 20°C auf und die darin enthaltene Wärmeenergie bleibt weitgehend ungenutzt.

Zur Abwasserwärmenutzung sind Rinnenwärmeübertrager bekannt, beispielsweise Plattenwärmeübertrager aus Edelstahl mit einer Trockenwetterrinne oder in Schalenform, welche direkt innerhalb eines erdverlegten Gerinnes und/oder Abwasserrohr an dessen Boden eingebaut werden. Hierbei fließt das Abwasser innerhalb der Trockenwetterrinne eines Wärmeübertragers oder überströmt den Wärmeübertrager vollständig bei höheren Abflussleistungen. Nachteilig bei derartigen Systemen ist, dass durch deren Einbau der freie durchströmbare Querschnitt des Gerinnes und/oder Abwasserrohrs reduziert wird, sodass es durch die Querschnittsreduzierung zu höheren Fließgeschwindigkeiten jedoch zu niedrigeren Abflussleistungen kommt. Zudem sind solche Systeme erst ab einem Kanaldurchmesser von ≥ DN 800 einbaubar. Des Weiteren weisen die bekannten Systeme eine niedrige Wärmeentzugsleistung auf, welche von der Abflussleistung abhängt und insbesondere bei Trockenwetter mit einer sehr geringen Abwasserströmung durch das Gerinne und/oder Abwasserrohr reduziert ist.

In der DE 20 2011 106 449 U1 wird das in einem Abwasserkanal oder einen Abwasserdruckleitung fließende Abwasser an einer Entnahmestelle mittels einer Strömungsleiteinrichtung entnommen, wobei zwischen der Strömungsleiteinrichtung und der Kanalsohle ein Sammelraum mit einem definierten Abstand zur Kanalsohle vorgesehen ist. Aufgrund der Abmessungen des Kanals ist das Volumen dieses Sammelraums jedoch gering, aus welchem das gesammelte Abwasser anschließend zu einem externen Wärmeaustauscher gepumpt wird. Zudem verringert die Strömungsleiteinrichtung den freien durchströmbaren Querschnitt des Abwasserkanals oder der Abwasserdruckleitung.

Des Weiteren sind externe Abwasserwärmenutzungsanlagen bekannt, bei denen ein Abwasserteilstrom aus dem Kanal über ein aufwändiges Bauwerk abgezogen, vorgereinigt und anschließend einem Abwasserwärmeübertrager zugeführt wird. Nachteilig sind der zusätzlich zu errichtende, aufwändige Betonschacht mit Pumpe und Vorreinigung-, Aufbereitungs- und Förderanlagen.

Die FR 2 982 357 A1 offenbart eine Vorrichtung für die Wärmewiedergewinnung, bei welcher aus einem Teilstück einer Abwasserleitung Abwasser über ein Wehr in eine Sammelrinne zur weiteren Förderung zu einer Abwasserwärmenutzungseinrichtung abgeleitet wird. Nachteilig hierbei ist der fehlende Feststoffrückhalt und das begrenzte Speicher- und Puffervolumen der Sammelrinne. Dies gilt entsprechend ebenfalls für die in der DE 36 05 585 A1 beanspruchte eine Anlage zur Wärmerückgewinnung aus Abwässern, bei welcher das Abwasser direkt einen Abwasserauffangschacht mittels einer Förderpumpe entnommen wird.

In der DE 10 2007 013 296 A1 ist die Wand eines Abwasserkanals seitlich durchbrochen. Das Abwasser wird seitlich aus dem Durchbruch des Abwasserkanal mittels einer Filtervorrichtung mit Reinigungsvorrichtung entnommen, in einen Zwischenspeicher geführt und anschließend mittels einer Pumpe zu einem externen Wärmeaustauscher gefördert. Nachteilig ist hierbei der material- und durchmesserbegrenzte Durchbruch des Abwasserkanals.

Weitere Nachteile der zuvor genannten Systeme sind die starke Reduzierung des freien Kanalquerschnittes, die eingeschränkte Einsetzbarkeit lediglich für Kanäle mit einem Durchmesser von ≥ DN 800, die sehr geringe Wärmeübertragungsleistung durch einmaliges Überströmen von Abwasser und die starke Abhängigkeit vom jeweils vorliegenden Abwasservolumenstrom sowie die hohen Herstellungskosten und insbesondere die hohen Einbaukosten in bestehenden erdverlegten Abwasserkanälen.

Aufgabe der Erfindung ist es, den Stand der Technik zu verbessern.

Gelöst wird die Aufgabe durch eine Abwasserwärmenutzungsvorrichtung zum Nutzen von Abwasserwärme aus Abwasserkanälen, wobei die Abwasserwärmenutzungsvorrichtung einen Kanalschacht mit einem Gerinne, einen Sammelraum, eine Fördereinrichtung, einen Speicherbehälter und eine Rohrleitung aufweist, und der Abwasserwärmenutzungsvorrichtung eine Wärmenutzungseinrichtung zuordenbar ist, wobei die Abwasserwärmenutzungsvorrichtung eine Entnahmeeinrichtung zum Entnehmen und zum Überführen von Abwasser aus dem Gerinne in den Sammelraum aufweist, wobei die Entnahmeeinrichtung als ein Teilstück des Gerinnes innerhalb des Kanalschachtes angeordnet ist, sodass im wesentlichen ein freier Querschnitt des Gerinnes erhalten bleibt und im Kanalschacht Abwasser über die Entnahmeeinrichtung zum Sammelraum und vom Sammelraum durch die Rohrleitung mittels der Fördereinrichtung zum Speicherbehälter und/oder über die Wärmenutzungseinrichtung förderbar ist.

Somit wird unter Nutzung eines vorhandenen oder neu errichteten Kanalschachtes eine einfache Abwasserwärmenutzungsvorrichtung bereitgestellt, ohne dass der freie Querschnitt des Gerinnes im Kanalschacht verändert und/oder eine Vielzahl von Bauwerken und Aufbereitungsanlagen notwendig sind.

Es ist besonders vorteilhaft, dass die Entnahmeeinrichtung an den Durchmesser des Gerinnes angepasst ist, und somit als Teilstück in jedes Gerinne eingesetzt werden kann. Da die Entnahmeeinrichtung innerhalb des Kanalschachtes angeordnet ist, ist ausreichend Platz für den Einbau der Entnahmeeinrichtung im Rahmen eines Nachrüstens eines bestehenden Kanalschachtes. Zudem liegt im Kanalschacht keine Beschränkung durch die Unfallverhütungsvorschriften vor, welche erst bei einem Mindestdurchmesser von 800mm ein Arbeiten von Menschen in einem Abwasserkanal erlauben.

Da das Abwasser aus dem Gerinne über die Entnahmeeinrichtung in den Sammelraum innerhalb des Kanalschachtes geführt wird, kann dieser Sammelraum selbst bereits einen Pufferbehälter darstellen, sodass keine direkte Abhängigkeit der für die Wärmenutzungseinrichtung zur Verfügung stehenden Abwassermenge von dem jeweils vorliegenden Abwasservolumenstrom im Gerinne besteht. Somit ist bei Trockenwetter und folglich bei geringem Abwasservolumenstrom im Gerinne eine deutlich geringere Abhängigkeit und somit Einschränkung der Wärmenutzungsleistung der Wärmenutzungseinrichtung gegeben, solange der Sammelraum und/oder der Speicherbehälter ausreichend Abwasser enthalten.

Ein wesentlicher Gedanke der Erfindung beruht darauf, dass die Entnahmeeinrichtung der Abwasserwärmenutzungseinrichtung einen Teil des Gerinnes innerhalb des Kanalschachtes ersetzt und ein Teilstrom des Abwassers in einen Sammelraum ableitet. Wenn die Entnahmeeinrichtung nicht in das Gerinne selbst eingebaut wird, sondern dieses auf einer definierten Länge oder einer Gesamtlänge des Gerinnes ersetzt, bleibt der freie Querschnitt des Gerinnes im Wesentlichen erhalten und somit findet keine Beeinträchtigung des Abwasservolumenstroms statt.

Durch die Entnahme eines Teilstroms des Abwassers mittels der Entnahmeeinrichtung bleibt der Hauptstrom zum Abwasser- und Feststofftransport über das Gerinne und einen angeschlossenen Abwasserkanal innerhalb einer Kanalisation gewährleistet.

Zudem kann das im Sammelraum gesammelte Abwasser bedarfsabhängig mittels der Fördereinrichtung zum Speicherbehälter und das im Speicherbehälter gespeicherte Abwasser wiederrum bedarfsabhängig über die Wärmenutzungseinrichtung gefördert werden.

Vor allem kann das gespeicherte Abwasser im Speicherbehälter mehrfach im Kreislauf über die Wärmenutzungseinrichtung bis zu einer Reduzierung der Abwassertemperatur auf beispielsweise 8°C geführt werden, sodass die Wärmeentzugsleistung erhöht wird.

### Folgendes Begriffliche sei erläutert:

Eine "Abwasserwärmenutzungsvorrichtung" ist insbesondere eine Vorrichtung, welche Abwasser aus einem Kanal entnimmt und einer Wärmenutzungseinrichtung zuführt. Eine Abwasserwärmenutzungsvorrichtung weist insbesondere eine Entnahmeeinrichtung auf, welche als ein Teilstück des Gerinnes innerhalb des Kanalschachtes ausgeführt sein kann. Des Weiteren weist die Abwasserwärmenutzungsvorrichtung insbesondere einen Sammelraum im Kanalschacht, eine Fördereinrichtung, einen Speicherbehälter, mindestens eine Rohrleitung und/oder Steuer- und Regelventile auf. Diese Bestandteile der Abwasserwärmenutzungsvorrichtung müssen sich nicht zwingend alle in dem Kanalschacht selbst befinden, sondern einzelne Bestandteile können auch außerhalb des Kanalschachtes angeordnet sein. Beispielsweise können die Fördereinrichtung, der Speicherbehälter und/oder die Wärmenutzungseinrichtung in einem Maschinenhaus und/oder einer Heizzentrale oberirdisch angeordnet sein.

Unter "Abwasserwärme" wird insbesondere die im Abwasser enthaltene thermische Energie verstanden. Die Abwasserwärme ist insbesondere die Wärme, welche mit häuslichem, gewerblichem und/oder industriellem Abwasser und/oder Regenwasser ungenutzt einer Kanalisation zugeführt wird.

Ein "Abwasserkanal" ist insbesondere ein Bauteil zur Ableitung von Abwasser, Regen- und/oder Schmelzwasser. Ein Abwasserkanal kann ein Bestandteil einer Kanalisation sein, welche insbesondere eine Anlage zum Sammeln und Ableiten von Abwasser, Regen- oder Schmelzwasser durch unterirdische Abwasserkanäle im Rahmen einer Abwasserbeseitigung darstellt. Ein Abwasserkanal ist insbesondere unterirdisch und/oder oberirdisch verlegt. Ein Abwasserkanal kann aus Ziegeln aufgemauert, in Ton- und/oder Steinzeugrohr und/oder in verschiedenen Materialien, wie Faserbeton, Gusseisen, Stahl, Steinzeug, Kunststoff und/oder Beton, ausgeführt sein. Bei einem Abwasserkanal kann es sich auch um einen Regenwasserkanal, Schmutzwasserkanal und/oder Mischwasserkanal handeln. Der Abwasserkanal kann eine Nennweite im Bereich von DN 50 bis DN 4500, insbesondere von DN 150 bis DN 1000, bevorzugt DN 200 bis DN 600 aufweisen.

Ein "Kanalschacht" ist insbesondere ein Bauwerk für ein erdverlegtes Gerinne oder einer Abwasserleitung. Ein Kanalschacht dient insbesondere zur Be- und Entlüftung, Kontrolle, Wartung, Reinigung, zur Zusammenführung sowie Richtungs-, Neigungs- und/oder Querschnittsveränderung von Gerinnen, Kanälen und/oder Leitungen. Ein Kanalschacht kann eine oberirdische Schachtabdeckung, einen Schachthals, einen Schachtring oder mehrere Schachtringe sowie am Boden einen Auftritt um das Gerinne aufweisen, wobei der Auftritt mittig oder außenmittig unterbrochen ausgeführt sein kann. Der Kanalschacht weist insbesondere eine Nennweite von DN 600 bis DN 3000 auf. Ein Kanalschacht kann aufgemauert sein und/oder weist Bestandteile aus Beton auf. Ein Kanalschacht ist insbesondere auch aus Kunststoff, wie beispielsweise Polypropylen, ausgeführt.

Ein "Gerinne" ist insbesondere ein Bauteil zum Ableiten von Abwasser innerhalb eines Kanalschachtes. Bei einem Gerinne kann es sich um ein geschlossenes Gerinne, wie beispielsweise ein Rohr, oder ein offenes Gerinne, wie beispielsweise ein offenes Rohr mit halbkreisförmigem Querschnitt (Halbgerinne) handeln. Ein Gerinne kann auch ein Hohlgerinne sein, bei welchem das Abwasser höher als der Kreismittelpunkt stehen kann. Ein Gerinne kann auch nicht als ein separates Bauteil ausgeführt sein, sondern ein Gerinne kann auch als ein einstückiger oder mehrstückiger Abwasserkanal direkt durch den Kanalschacht verlaufen. Ein Gerinne weist bevorzugt den Durchmesser eines zuleitenden Abwasserkanals auf.

Ein "Sammelraum" ist insbesondere ein Raum innerhalb des Kanalschachtes, in welchen Abwasser aus dem Gerinne mittels der Entnahmeeinrichtung geleitet wird. Der Sammelraum kann unter der Entnahmeeinrichtung angeordnet sein, sodass das durch die Entnahmeeinrichtung entnommene Abwasser direkt in den Sammelraum fließt. Der Sammelraum stellt insbesondere einen Puffer- und/oder Speicherraum für entnommenes Abwasser dar. Das entnommene Abwasser wird beispielsweise über eine Rohrleitung aus dem Sammelraum geführt. Zur Steuerung des Füllstands des entnommenen Abwassers im Sammelraum wird oder werden entweder ein Füllstandssensor oder mehrere Füllstandssensoren oder ein selbsttätiges Vakuumventil mit zwei zusätzlichen Rückschlagklappen/-ventilen verwendet.

Eine "Fördereinrichtung" ist insbesondere eine Einrichtung zum Fördern und/oder Transportieren von Abwasser. Bei der Fördereinrichtung handelt es sich insbesondere um ein Vakuumsystem, eine Tauch-, Saug- und/oder Druckpumpe.

Ein "Speicherbehälter" ist eine Einrichtung zum Speichern von entnommenem Abwasser. In den Speicherbehälter kann das entnommene Abwasser aus dem Sammelraum mittels der Fördereinrichtung gefördert werden. Aus dem Speicherbehälter wird insbesondere das Abwasser über die Wärmenutzungseinrichtung, bevorzugt im Kreislauf, gefördert. Der Speicherbehälter weist beispielsweise einen inneren Hohlraum zur Aufnahme des Abwassers auf und kann außen zur Vermeidung von Wärmeverlusten isoliert sein.

Eine "Rohrleitung" ist insbesondere eine Anlage zum Transport von Abwasser. Eine Rohrleitung kann ein Rohr, Rohrformteil, Ausdehnungsstück, Armatur, Dichtung, ein Verbindungselement wie Flansch, Fitting, Verschraubung, Muffe und/oder ein Befestigungselement aufweisen. Eine Rohrleitung besteht insbesondere aus Kunststoff wie Polyethylen, vernetztes Polyethylen, Polypropylen und/oder Polyvinylchlorid. Eine Rohrleitung weist beispielsweise eine Nennweite von DN 25 bis DN 500 auf.

Eine "Wärmenutzungseinrichtung" ist insbesondere eine Einrichtung, welche die thermische Energie des aus dem Gerinne entnommenen Abwassers nutzbar macht. Eine Wärmenutzungseinrichtung kann dabei über die oben definierte Fördereinrichtung mit Abwasser beschickt werden oder eine eigene Fördereinrichtung zur Entnahme von Abwasser aus dem Speicherbehälter aufweisen.

Eine "Entnahmeeinrichtung" ist insbesondere eine Einrichtung zum Entnehmen von Abwasser aus dem Gerinne und zum Überführen des entnommenen Abwassers in den Sammelraum. Eine Entnahmeeinrichtung ist beispielsweise ein offenes oder ein geschlossenes Gerinne, welches innerhalb des Kanalschachtes anstelle des sonst vorhandenen Gerinnes oder eines Teilstückes des Gerinnes eingesetzt ist, sodass das Abwasser, welches durch den Abwasserkanal auf der einen Seite in den Kanalschacht geführt wird, durch die Entnahmeeinrichtung fließt und von der Entnahmeeinrichtung auf der anderen Seite durch den Abwasserkanal wieder den Kanalschacht verlässt. Zum Entnehmen eines Teilstroms des Abwassers weist die Entnahmeeinrichtung insbesondere mindestens eine Öffnung oder mehrere Öffnungen auf, sodass der Teilstrom des Abwassers aus der Entnahmeeinrichtung durch die Öffnung oder die Öffnungen in den Sammelraum fließt. Eine Entnahmeeinrichtung kann auch zusätzlich eine Strömungsleiteinrichtung aufweisen, wie diese in DE 20 2011 106 449 U1 und EP 2 574 853 A1 beschrieben ist. Bei der Strömungsleiteinrichtung handelt es sich insbesondere um ein Sägezahnprofil, welches vor den Öffnungen der Entnahmeeinrichtung als Partikelabweiser angeordnet ist. Das Sägezahnprofil der Strömungsleiteinrichtung weist insbesondere Kunststoff auf.

Unter einem "Teilstück" wird verstanden, dass die Entnahmeeinrichtung insbesondere anstelle eines Abschnittes des Gerinnes im Kanalschacht angeordnet ist. Somit kann das Teilstück zwischen dem Abschnitt des Gerinnes, welcher das Abwasser in den Kanalschacht hineinleitet und dem Abschnitt des Gerinnes, welcher das Wasser aus dem Kanalschacht hinausleitet, angeordnet sein. Somit übernimmt die Entnahmeeinrichtung die Leitung des Abwassers auf diesem Abschnitt des Teilstückes. Anstelle eines Teilstückes des Gerinnes kann die Entnahmeeinrichtung auch das sonst vorhandene Gerinne innerhalb des Kanalschachtes komplett ersetzen.

Unter "im Wesentlichen ein freier Querschnitt des Gerinnes erhalten bleibt" wird verstanden, dass der innere freie Querschnitt des Gerinnes an der Stelle der angeordneten Entnahmeeinrichtung nicht oder nur geringfügig verringert wird. "Im Wesentlichen" bedeutet hierbei insbesondere, dass der freie Querschnitt der Entnahmeeinrichtung insbesondere ≥ 90%, bevorzugt 100% des freien Querschnitts des Gerinnes beträgt. Dadurch, dass im Wesentlichen ein freier Querschnitt des Gerinnes erhalten bleibt, wird die ausgelegte Strömungsgeschwindigkeit und Hydraulik im Gerinne nicht oder nur geringfügig begrenzt.

In einer weiteren Ausführungsform weist die Entnahmevorrichtung mehrere Öffnungen und/oder einen Partikelabweiser auf.

Durch die mehreren Öffnungen in der Entnahmeeinrichtung fließt ein Teilstrom des Abwassers über die gesamte Länge der Entnahmeeinrichtung in den Sammelraum ab. Die gezielte Ableitung des Abwassers in den Sammelraum kann durch unterschiedliche Öffnungsgeometrien, beispielsweise schräg gegen die Fließrichtung gestellte Bohrungen oder Schlitze, erfolgen.

Es ist besonders vorteilhaft, wenn durch die Öffnungsgeometrie und/oder einen Partikelabweiser im Wesentlichen partikelfreies Abwasser in den Sammelraum abgeleitet wird. Durch geschicktes Anbringen und Überströmen der Öffnungen kann zudem ein Verstopfen der Öffnungen durch Partikel vermieden oder verringert werden.

Eine "Öffnung" ist insbesondere ein gezielter Durchbruch durch den Mantel des Gerinnes und/oder der Entnahmeeinrichtung, sodass die Innenseite und die Außenseite des Gerinnes und/oder der Entnahmeeinrichtung durch die Öffnung verbunden sind. Bei einer Öffnung kann es sich insbesondere um eine Bohrung und/oder einen Schlitz handeln. Die Öffnung oder die Öffnungen sind bevorzugt an den Seitenwänden der Entnahmeeinrichtung und/oder des Gerinnes angeordnet, um ein Abführen von Feststoffen mit dem entnommenen Abwasserteilstrom zu vermeiden. Die Anordnung, die Höhen und/oder die Anzahl der Öffnungen richten sich insbesondere nach der durchschnittlichen Füllung des Abwasserkanals und/oder Gerinnes.

Ein "Partikelabweiser" ist ein Bauteil, welches gezielt Partikel zurückhält und/oder ableitet, sodass im Wesentlichen partikelfreies Wasser durch die Entnahmeeinrichtung in dem Sammelraum abgeleitet wird.

Unter "im wesentlichen partikelfrei" wird verstanden, dass das Abwasser insbesondere keine Partikel mit einer Größe von ≥ 5mm, bevorzugt ≥ 3mm aufweist. Ein Partikelabweiser weist insbesondere ein Sägezahnprofil, Lochprofil und/oder ein Sieb auf.

Zur Anpassung an das jeweilige Gerinne im Kanalschacht weist die Entnahmeeinrichtung einen Innendurchmesser im Bereich von 100mm bis 1.200mm, bevorzugt von 200mm bis 600mm auf.

Somit ist die Entnahmeeinrichtung in Abwasserkanälen mit allen gängigen Nennweiten einsetzbar. Hierbei ist es besonders vorteilhaft, dass die Entnahmeeinrichtung auch bei Abwasserkanälen mit einer Nennweite von kleiner DN 800 einbaubar ist.

Der "Innendurchmesser" ist insbesondere der größtmögliche Abstand zweier Punkte der Kreislinie oder der inneren Oberflächenpunkte im inneren Hohlraum der Entnahmeeinrichtung.

In einer weiteren Ausführungsform weist die Abwasserwärmenutzungsvorrichtung einen zweiten Speicherbehälter, eine zweite Fördereinrichtung, eine zweite Rohrleitung und/oder weitere Rohrleitungen, Regel- und/oder Absperrorgane und/oder eine Steuer- und/oder Regeleinrichtung auf, sodass ein kontinuierlicher Betrieb der Wärmenutzungseinrichtung realisierbar ist.

Da bei Verwenden nur eines Speicherbehälters für die Dauer des Befüllens und Entleerens des Speicherbehälters kein Abwasser für die Wärmenutzungseinrichtung zur Verfügung steht, kann durch einen zweiten Speicherbehälter, eine zweite Fördereinrichtung, eine zweite Rohrleitung und/oder weitere Rohrleitungen, Regel- und/oder Absperrorgane und/oder eine Steuer- und/oder Regeleinrichtung ein kontinuierlicher Betrieb der Wärmenutzungseinrichtung realisiert werden. Insbesondere kann die Wärmenutzungseinrichtung intermittierend von dem ersten Speicherbehälter oder dem zweiten Speicherbehälter mit Abwasser beschickt werden. Zudem liegt eine Redundanz für einen störungsfreien kontinuierlichen Betrieb vor.

Alternativ zum zweiten Speicherbehälter kann ein kontinuierlicher Betrieb der Wärmenutzungseinrichtung auch über einen zusätzlichen Pufferspeicher zur Wärmenutzungseinrichtung realisiert werden.

Ein "zweiter Speicherbehälter" entspricht in seiner Funktionsweise dem oben definierten Speicherbehälter. Insbesondere können ein erster Speicherbehälter und ein zweiter Speicherbehälter durch zwei getrennte Behälter realisiert werden oder durch nur einen einzelnen Behälter mit zwei getrennten Kammern, wobei die beiden Kammern beispielsweise dann den ersten und zweiten Speicherbehälter ausbilden.

Eine "zweite Fördereinrichtung" entspricht in ihrer Ausbildung der oben definierten Fördereinrichtung.

Eine "zweite Rohrleitung" und/oder "weitere Rohrleitungen" entsprechen insbesondere in ihrer Ausbildung der oben definierten Rohrleitung.

Unter "Regel- und/oder Absperrorgane" werden insbesondere Bauteile verstanden, welche dazu dienen, in der Rohrleitung, dem Gerinne, der Entnahmeeinrichtung und/oder Abwasserwärmenutzungsvorrichtung den Volumenstrom anzuhalten, durchzulassen und/oder gezielt einzustellen. Ein Regel- und/oder Absperrorgan kann als Ventil, Schieber, Klappe und/oder Hahn ausgeführt sein. Bei einem Regel- und/oder Absperrorgan handelt es sich beispielsweise um einen Steckschieber, Messblende, Stauklappe, Absperrschieber, Absperrklappe, Absperrhahn, Absperrventil und/oder Vakuumventil.

Eine "Steuereinrichtung" ist insbesondere eine Einrichtung, bei welcher eine Größe oder mehrere Größen als Eingangsgrößen andere Größen als Ausgangsgrößen aufgrund von Systembedingungen beeinflussen. Bei einer Steuereinrichtung handelt es sich insbesondere um eine Einrichtung, welche gezielt die Abwasservolumenströme der Abwasserwärmenutzungsvorrichtung beeinflusst. Insbesondere wird mit der Steuereinrichtung ein Stellsignal an ein Regel- und/oder Absperrorgan vorgegeben.

Eine "Regeleinrichtung" ist insbesondere eine Einrichtung, bei welcher eine Größe als Regelgröße kontinuierlich erfasst, mit einer anderen Größe als Führungsgröße verglichen und in Abhängigkeit des Ergebnisses dieses Vergleichs zur Abgleichung an die Führungsgröße beeinflusst wird. Eine Regeleinrichtung verwendet insbesondere einen geschlossenen Regelkreis. Bei Verwenden einer Regeleinrichtung wird insbesondere der Sollwert, beispielsweise ein vorgegebener Volumenstrom des Abwassers, mit dem gemessenen Volumenstrom verglichen und aufgrund der Abweichung vom Sollwert wird ein Stellsignal von der Regeleirichtung an ein Regelorgan angelegt, um den vorgegebenen Volumenstrom einzustellen und zu halten.

Unter einem "kontinuierlichen Betrieb" wird ein Betrieb der Wärmenutzungseinrichtung verstanden, welcher ohne Unterbrechungen abläuft.

Um ein Verstopfen, Verockern und/oder Verschlammen der Entnahmeeinrichtung und/oder des Sammelraums zu vermeiden, weist die Abwasserwärmenutzungsvorrichtung eine Rückspüleinrichtung auf, sodass die Entnahmeeinrichtung rückspülbar ist und/oder Ablagerungen im Sammelraum in das Gerinne rückspülbar sind.

Es ist besonders vorteilhaft, dass durch ein Rückspülen mittels der Rückspüleinrichtung gleichzeitig eine Schwallspülung und somit eine Reinigung des dem Gerinne nachfolgenden Abwasserkanals erfolgt.

Eine "Rückspüleinrichtung" ist insbesondere eine Einrichtung zum Spülen der Entnahmeeirichtung und/oder des Sammelraums entgegen der üblichen Förderrichtung des Abwassers. Insbesondere verwendet die Rückspüleinrichtung das abgekühlte Abwasser aus einem der Speicherbehälter durch Rücktransport des abgekühlten Abwassers durch die gleiche Rohrleitung, durch welche das Abwasser zuvor in den Speicherbehälter gefördert wurde, zurück in den Kanalschacht. Die Rückspüleinrichtung kann eine Rückspülpumpe aufweisen und/oder das Rückspülen erfolgt aufgrund des geodätischen Überdruckes.

In einer weiteren Ausführungsform ist Fördereinrichtung mittels einer Umschalteinrichtung zur Saugförderung oder Druckdruckförderung betreibbar.

Dadurch, dass die Fördereinrichtung zwischen Saugförderung und Druckförderung umgeschaltet werden kann, kann eine einzige Fördereinrichtung sowohl für das Fördern des entnommenen Abwasserteilstroms in den Speicherbehälter als auch umgekehrt zum Fördern des abgekühlten Abwassers aus dem Speicherbehälter zurück in den Kanalschacht und zur Rückspülung verwendet werden.

Eine "Umschalteinrichtung" ist insbesondere eine Einrichtung zur Umschalten einer Fördereinrichtung zwischen Saugförderung und Druckförderung. Bei einer Umschalteinrichtung kann es sich beispielsweise um einen Umrichter handeln, welcher die Drehrichtung einer Pumpe derart ändert, dass diese entweder als Saugpumpe oder als Druckpumpe betrieben wird.

Um eine Füllstandshöhe des entnommenen Abwassers im Sammelraum zu steuern, weist die Abwasserwärmenutzungsvorrichtung ein automatisches Ventil und/oder mindestens ein Rückschlagventil auf.

In einer weiteren Ausführungsform weist die Abwasserwärmenutzungsvorrichtung einen zweiten Kanalschacht, eine zweite Entnahmeeinrichtung und einen zweiten Sammelraum und/oder einen dritten Kanalschacht, eine dritte Entnahmeeinrichtung und einen dritten Sammelraum, einen vierten Kanalschacht, eine vierte Entnahmeeinrichtung und einen vierten Sammelraum und/oder einen weiteren Kanalschacht, eine weitere Entnahmeeinrichtung und einen weiteren Sammelraum auf.

Eine Abwasserwärmenutzungsvorrichtung kann insbesondere einen erfindungsgemäßen Kanalschacht bis zu weit über 100 erfindungsgemäße Kanalschächte aufweisen.

Dadurch, dass der Speicherbehälter oder die Speicherbehälter von mehreren Kanalschächten Abwasser erhalten, kann der kontinuierliche Betrieb der Wärmenutzungseinrichtung sichergestellt werden, insbesondere auch bei geringem Abwasseranfall in den Abend- und Nachtstunden. Zudem kann bei Bedarf die zur Verfügung stehende Abwassermenge und der Durchsatz durch die Wärmenutzungseinrichtung erhöht werden.

Aufgrund der Beschickung einer Fördereinrichtung mit Abwasser aus mehreren Kanalschächten kann die Baugröße der Abwasserwärmenutzungsvorrichtung gering gehalten werden.

Ein "zweiter, dritter, vierter und/oder weiterer Kanalschacht" entspricht in seiner Funktion und Ausführung dem oben definierten Kanalschacht.

Eine "zweite, dritte, vierte und/oder weitere Entnahmeeinrichtung" entspricht in ihrer Funktion und Ausführung der oben definierten Entnahmeeinrichtung.

Ein "zweiter, dritter, vierter und/oder weiterer Sammelraum entspricht in seiner Funktion und Ausführung dem oben definierten Sammelraum.

Um eine kompakte Bauform und eine optimale Abstimmung der Systemkomponenten der Abwasserwärmenutzungsvorrichtung zu gewährleisten, weist die Abwasserwärmenutzungsvorrichtung die Wärmenutzungseinrichtung auf.

Somit kann die Wärmenutzungseinrichtung optimal über die Steuer- und/oder Regeleinrichtung der Abwasserwärmenutzungsvorrichtung in den Gesamtbetrieb eingebunden werden. Zudem kann eine schlüsselfertige Gesamtanlage bereitgestellt werden.

In einer weiteren Ausführungsform ist die Wärmenutzungseinrichtung eine Wärmepumpe mit integriertem Wärmeübertrager.

Dadurch kann die Abwasserwärme zum Beheizen von beispielsweise privaten und/oder öffentlichen Gebäuden verwendet werden.

Eine "Wärmepumpe" ist insbesondere eine Maschine, welche unter Aufwendung von technischer Arbeit thermische Energie aus dem Abwasser aufnimmt und zusammen mit der Antriebsenergie als Nutzwärme auf ein zu beheizendes System mit höherer Temperatur überträgt.

Ein "Wärmeübertrager" (auch "Wärmetauscher" genannt) ist insbesondere ein Apparat, welcher thermische Energie von einem Stoffstrom auf einen anderen Stoffstrom überträgt. Insbesondere überträgt der Wärmeübertrager die thermische Energie des Abwassers auf einen zu erwärmenden Stoffstrom.

In einem zusätzlichen Aspekt der Erfindung wird die Aufgabe gelöst durch ein Abwasserwärmenutzungssystem, wobei das Abwasserwärmenutzungssystem mehrere zuvor beschriebene Abwasserwärmenutzungsvorrichtungen aufweist.

Dadurch kann insbesondere in großen Kanalisationen über ein Abwasserwärmenutzungssystem ein Verbund von Abwasserwärmenutzungsvorrichtungen sowie eine großflächige Redundanz bereitgestellt werden.

In einem weiteren Aspekt der Erfindung wird die Aufgabe gelöst durch ein Verfahren zum Nutzen von Abwasserwärme aus Abwasserkanälen mittels einer zuvor beschriebenen Abwasserwärmenutzungsvorrichtung oder einem zuvor beschriebenen Abwasserwärmenutzungssystems mit folgenden Schritten:
- Entnehmen von Abwasser aus dem Gerinne innerhalb des Kanalschachtes und Überführen in den Sammelraum mittels der Entnahmeeinrichtung,
- Fördern des überführten Abwassers aus dem Sammelraum mittels der Fördereinrichtung in den Speicherbehälter,
- Fördern des Abwassers aus dem Speicherbehälter über die Wärmenutzungseinrichtung zum Entnehmen von thermischer Energie aus dem Abwasser und
- Rückführen des abgekühlten Abwassers in den Gerinne und/oder Rückspülen der Entnahmeeinrichtung mit dem abgekühlten Abwasser und/oder Rückspülen von Ablagerungen im Sammelraum mit dem abgekühlten Abwasser in das Gerinne.

Somit wird ein Verfahren zum Nutzen von Abwasserwärme aus Abwasserkanälen bereitgestellt, bei dem durch die einfache Ausführung der Abwasserwärmenutzungsvorrichtung ohne zusätzliche Bauwerke und Aufbereitungsanlagen ein sicherer und wartungsarmer Betrieb gewährleistet ist.

Es ist besonders vorteilhaft, dass durch dieses Verfahren ein kontinuierlicher Betrieb der Wärmenutzungseinrichtung mit einer hohen Wärmeentzugsleistung realisiert wird. Vor allem ist die Abwasserwärmenutzung bei diesem erfinderischen Verfahren weniger abhängig vom jeweiligen Volumenstrom des Abwassers im Gerinne. Des Weiteren wird durch mehrfaches Nutzen der thermischen Energie des Abwassers die Wärmeentzugsleistung erhöht.

In einem zusätzlichen Aspekt der Erfindung wird die Aufgabe gelöst durch ein Verfahren zum Austausch oder Nachrüsten eines bestehenden Kanalschachtes zu einer zuvor beschriebenen Abwasserwärmenutzungsvorrichtung mit folgenden Schritten:
- Austauschen des bestehenden Kanalschachtes durch einen Kanalschacht der Abwasserwärmenutzungsvorrichtung mit einem Gerinne, einem Sammelraum, einer Fördereinrichtung, einem Speicherbehälter, einer Rohrleitung und einer Entnahmeeinrichtung oder
- Entfernen eines Bodens des bestehenden Kanalschachtes und/oder Ausschachten eines Erdreiches unterhalb des Bodens des bestehenden Kanalschachtes und Einsetzen eines Kanalschachtes der Abwasserwärmenutzungsvorrichtung innerhalb des bestehenden Kanalschachtes und
- Verbinden des Sammelraums über die Rohrleitung zum Fördern von überführtem Abwasser aus dem Sammelraum mit einem Speicherbehälter und/oder einer Wärmenutzungseinrichtung, sodass eine zuvor beschriebene Abwasserwärmenutzungsvorrichtung ausgebildet ist.

Somit kann im Rahmen einer Kanal- und/oder Schachtsanierung eine kostengünstiges Installieren und/oder Nachrüsten einer Abwasserwärmenutzungsvorrichtung erfolgen.

Hierbei wird entweder ein vorhandener Kanalschacht komplett durch eine neuen, bereits ausgerüsteten erfindungsgemäßen Kanalschacht ersetzt oder der erfindungsgemäße Kanalschacht wird innerhalb des vorhandenen Kanalschachtes als sogenannte Schacht-in-Schacht-Lösung eingebaut.

Vor allem wird beim Nachrüsten oder Austauschen der vorhandene freie Gerinnequerschnitt im Wesentlichen beibehalten, sodass der vorhandene Volumenstrom durch das bestehende Gerinne und somit das gesamte Kanalsystem nicht beeinträchtigt wird.

Gleichzeitig wird durch das Nachrüsten und somit das regelmäßige Rückspülen der Entnahmeeinrichtung und/oder des Sammelraums gleichzeitig eine Schwallspülung des Gerinnes durchgeführt, sodass sich die regelmäßig durchzuführenden Reinigungen des Gerinnes reduzieren.

Alternativ kann das Nachrüsten eines bestehenden Kanalschachtes auch durch Entfernen eines Teilstücks des bestehenden Gerinnes auf einer Länge einer Entnahmeeinrichtung innerhalb des bestehenden Kanalschachtes und Einsetzen der Entnahmeeinrichtung in das Gerinne oder durch Umrüsten des bestehenden Gerinnes innerhalb des Kanalschachtes zu der Entnahmeeinrichtung durch Einbringen von mehreren Öffnungen sowie durch Einrichten eines Sammelraums unterhalb der nun vorliegenden Entnahmeeinrichtung erfolgen. Anschließend kann ein Verbinden des geschaffenen Sammelraums mit einer Rohrleitung zum Fördern von überführtem Abwasser aus dem Sammelraum zu einem Speicherbehälter und/oder über eine Wärmenutzungseinrichtung durchgeführt werden, sodass eine zuvor beschriebene Abwasserwärmenutzungsvorrichtung ausgebildet ist.

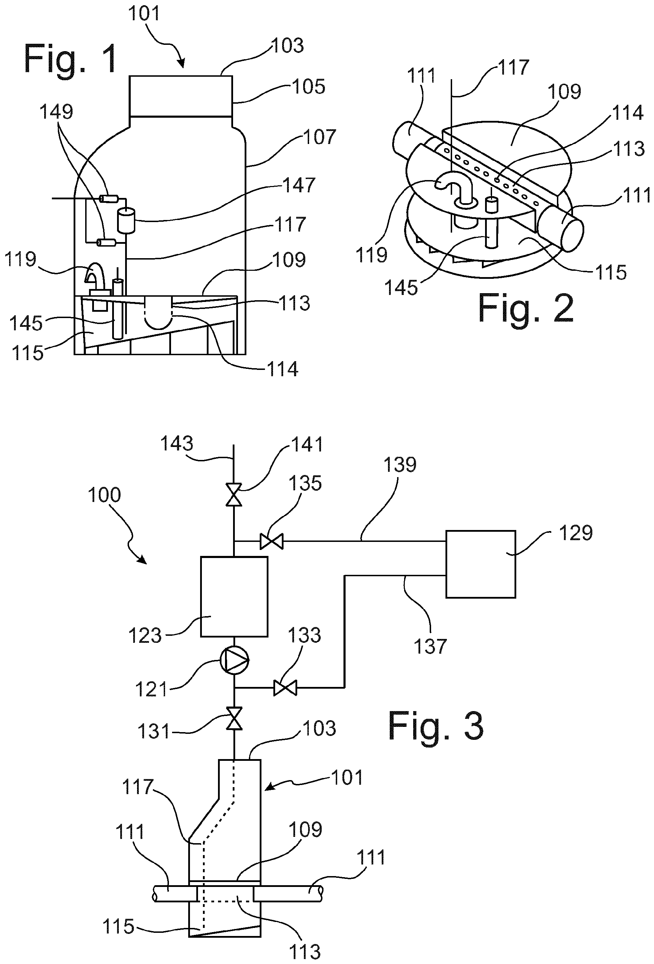

Im Weiteren wird die Erfindung anhand von Ausführungsbeispielen näher erläutert. Es zeigen
- Figur 1: eine schematische Schnittdarstellung eines erfindungsgemäßen Kanalschachtes mit einem Entnahmegerinne,
- Figur 2: eine dreidimensionale Darstellung des unteren Abschnittes des Kanalschachtes aus Figur 1,
- Figur 3: eine Abwasserwärmenutzungsanlage mit Kanalschacht, einem Abwassersammelbehälter und einer Wärmepumpe mit integriertem Wärmeübertrager, und

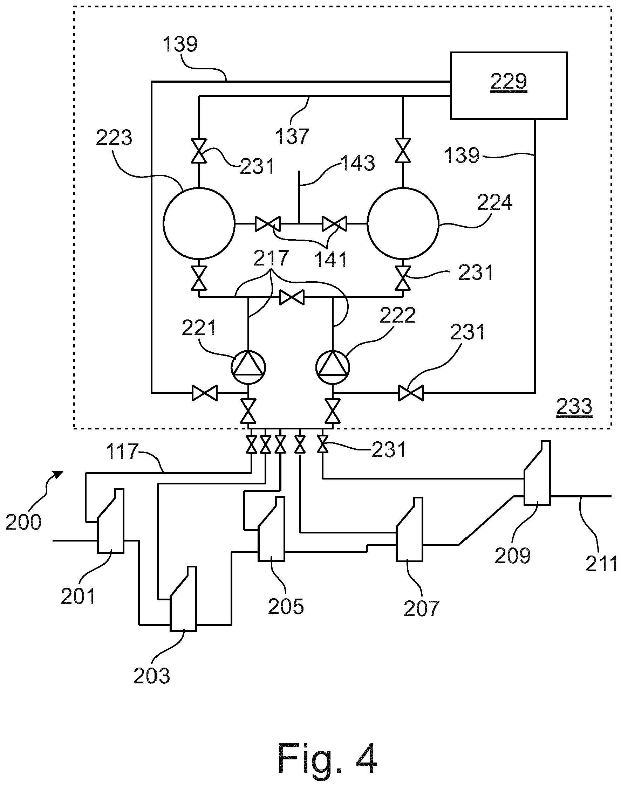

- Figur 4: eine Abwasserwärmenutzungsvorrichtung in einem Gebäude mit einer Heizzentrale, welche mit fünf Kanalschächten verbunden ist.

Eine Abwasserwärmenutzungsanlage 100 weist einen Kanalschacht 101 und außerhalb des Kanalschachtes 101 einen Abwassersammelbehälter 123 auf, welcher mittels einer Förder- und Rückspülleitung 117 mit dem Kanalschacht 101 verbunden ist. Des Weiteren umfasst die Abwasserwärmenutzungsanlage 100 außerhalb des Kanalschachtes 101 eine Zuführleitung 137, eine Saug-/Druckpumpe 121, eine Wärmepumpe mit integriertem Wärmeübertrager 129, eine Rückführleitung 139 sowie ein erstes Absperrventil 131, ein zweites Absperrventil 133 und ein drittes Absperrventil 135. Der Abwassersammelbehälter 123 ist mit einer Be- und Entlüftungsleitung 143 verbunden, wobei die Be- und Entlüftungsleitung 143 ein Be- und Entlüftungsventil 141 aufweist.

Der Kanalschacht 101 mit einer Nennweite DN 1000 weist eine Schachtabdeckung 103, einen Schachthals 105, einen Schachtring 107 und einen Auftritt 109 auf. Der Auftritt 109 ist mittig unterbrochen ausgeführt, wobei unterhalb der Unterbrechung ein offenes Entnahmegerinne 113 angeordnet ist. Das Entnahmegerinne 113 weist eine Vielzahl von seitlichen Öffnungen 114 auf. Außerhalb des Bereiches des Auftritts 109 ist das Entnahmegerinne 113 beidseitig mit einem Abwasserrohr 111 verbunden. Unterhalb des Auftrittes 109 befindet sich eine Sammelkammer 115. Durch den Auftritt 109 ist die Förder- und Rückspülleitung 117 in die Sammelkammer 115, eine Be- und Entlüftung 119 der Sammelkammer 115 und ein Staurohr 145 geführt. Die Förder- und Rückspülleitung 117 führt vom unteren Bereich der Sammelkammer 115 durch den Auftritt 109 innen hoch im Kanalschacht 101 und durchdringt in mittlerer Höhe des Kanalschachtes 101 den Schachtring 107. Die Förder- und Rückspülleitung 117 ist mit einem mit automatischen Ventilen 147 in Verbindung mit zwei parallel gesetzten Rückschlagventilen 149 ausgerüstet.

Abwasser strömt über das eine Ende des Abwasserrohrs 111 in das Entnahmegerinne 113 und durch die Öffnungen 114 strömt ein Teilstrom des Abwassers in die Sammelkammer 115. Das Abwasser, welches nicht durch die Öffnungen 114 in die Sammelkammer 115 abgeleitet wird, verlässt als Hauptstrom das Entnahmegerinne 113 über das andere Ende des Abwasserrohrs 111 und somit den Kanalschacht 101 in eine angeschlossene Kanalisation.

Mittels des automatischen Ventils 147 in Verbindung mit den zwei parallel gesetzten Rückschlagventilen 149 wird über das Staurohr 145 ein Füllstand in der Sammelkammer 115 ermittelt. Wenn der Füllstand ein vorgegebenes Minimum von mindesten 120mm Abwassersäule in der Sammelkammer 115 entspricht, öffnet das Ventil 147 und das entnommene Abwasser aus der Sammelkammer 115 wird mittels der Saug-/Druckpumpe 121 über die Förder- und Rückspülleitung 117 bei geöffnetem ersten Absperrventil 131 und bei Entlüftung der Be- und Entlüftungsleitung 143 mit geöffneten Be- und Entlüftungsventil 141 in den Abwassersammelbehälter 123 gefördert. Das Abwasser weist eine Temperatur von 15°C im Abwassersammelbehälter 123 auf. Sobald der Abwassersammelbehälter 123 mit Abwasser gefüllt ist, wird das erste Absperrventil 131 geschlossen und mittels der Saug-/Druckpumpe 121 durch die Zuführleitung 137 bei geöffnetem zweitem Absperrventil 133 das Abwasser über die Wärmepumpe mit integriertem Wärmeübertrager 129 und zurück über die Rückführleitung 139 bei geöffnetem dritten Absperrventil 135 in den Abwassersammelbehälter 123 gefördert.

Die Wärmepumpe mit integriertem Wärmeübertrager 129 entnimmt dem Abwasser beim Durchströmen eine entsprechende thermische Energie. Das Abwasser aus dem Abwassersammelbehälter 123 wird so lange im Kreislauf über die Wärmepumpe mit integriertem Wärmeübertrager 129 geführt, bis das Abwasser auf eine Abwassertemperatur von 8°C abgekühlt ist. Daraufhin wird die Förderung mittels der Saug-/Druckpumpe 121 zur Wärmepumpe mit integriertem Wärmeübertrager 129 gestoppt und das erste Absperrventil 131 geöffnet.

Zur Entleerung des Abwassersammelbehälters 123 wird bei den geschlossenen ersten und zweiten Absperrventilen 133 und 135 das Abwasser aus dem Abwassersammelbehälter 123 mittels der Saug-/Druckpumpe 121 durch die Förder- und Rückspülleitung 117 zurück in den Kanalschacht 101 gefördert und füllt dort die Sammelkammer 115. Dabei wird die Sammelkammer 115 vollständig mit abgekühltem Abwasser geflutet und das abgekühlte Abwasser dringt durch die Öffnungen 114 in das Entnahmegerinne 113 zur Rückspülung ein. Dadurch werden Partikel und Ablagerungen, welche sich in den Öffnungen 114 und an dem Entnahmegerinne 113 festgesetzt haben, freigespült und verlassen die Entnahmegerinne 113 über das ableitende Abwasserrohr 111.

Durch die Führung der Förder- und Rückspülleitung 117 bis kurz oberhalb des Bodens der Sammelkammer 115 werden Ablagerungen und Verockerungen in der Sammelkammer 115 gelockert und über die Öffnungen 114 in das offene Entnahmegerinne 113 und weiter über das ableitende Abwasserrohr 111 in die angeschlossene Kanalisation gespült.

In einer Alternative weist eine Abwasserwärmenutzungsvorrichtung 200 einen ersten Kanalschacht 201, einen zweiten Kanalschacht 203, einen dritten Kanalschacht 205, einen vierten Kanalschacht 207, einen fünften Kanalschacht 209, eine erste Saug-/Druckpumpe 221, eine zweite Saug-/Druckpupe 222, fünf Förder- und Rückspülleitung 117, mehrere PE-HD Druckleitungen 217, einen ersten Abwassersammelbehälter 223, einen zweiten Abwassersammelbehälter 224, eine Wärmenutzungsanlage 229 und entsprechende Absperrventile 231 sowie eine Zuführleitung 137 und eine Rückführleitung 139 auf.

Der erste Kanalschacht 201, der zweite Kanalschacht 203, der dritte Kanalschacht 205, der vierte Kanalschacht 207 und der fünfte Kanalschacht 209 sind entsprechend des zuvor beschriebenen Kanalschachtes 101 ausgeführt, wobei jede Förder- und Rückspülleitung 117 in mittlerer Höhe den jeweiligen Kanalschacht 201, 203, 205, 207 und 209 verlässt und zu der ersten Saug-/Druckpumpe 221 und der zweiten Saug-/Druckpumpe 222 führt. Die Kanalschächte 201, 203, 205, 207 und 209 sind mit einen Sammler 211 verbunden, welcher eine Nennweite DN 250 hat.

Die erste Saug-/Druckpumpe 221, die zweite Saug-/Druckpumpe 222, der erste Abwassersammelbehälter 223, der zweite Abwassersammelbehälter 224, die Wärmenutzungsanlage 229 sowie die zugehörigen Absperrventile 231 und Rohrleitungen 217, 137 und 139 sind in einem Gebäude mit einer Heizzentrale 233 angeordnet.

Mittels des jeweiligen Entnahmegerinnes 113 in den Kanalschächten 201 bis 209 wird Abwasser aus dem Sammler 211 in die jeweiligen Sammelkammern 115 der Kanalschächte 201 bis 209 geleitet, wobei unterschiedliche Füllstände in den einzelnen Sammelkammern 115 erreicht werden. Nach einer definierten Zeit wird die erste Saug-/Druckpumpe 221 eingeschaltet und legt an alle Kanalschächte 201 bis 209 gleichzeitig einen Unterdruck an, um das in den einzelnen Sammelkammern 115 befindliche Abwasser abzusaugen. Über das in den Kanalschächten 201 bis 209 jeweils angeordnete automatischen Ventil 147 in Verbindung mit den beiden Rückschlagventilen 149 und dem Staurohr 145 wird der Füllstand der jeweiligen Sammelkammer 115 ermittelt und über eine nicht gezeigte Steuer- und Regeleinrichtung gesteuert. Mittels der Steuer- und Regeleinrichtung wird das entsprechende Absperrventile 231 geöffnet, damit das in der entsprechenden Sammelkammer 115 befindliche Abwasser abgesaugt und durch die PE-HD Druckleitung 217 mittels der ersten Saug-/Druckpumpe 221 bei entsprechend geöffneten Ventilen 231 in den ersten Abwassersammelbehälter 223 gefördert wird. In definierten Zeitintervallen wiederholt sich der oben beschriebene Absaugvorgang so oft, bis der erste Abwassersammelbehälter 223 gefüllt ist. Anschließend wird das Abwasser aus dem ersten Abwassersammelbehälter 223 durch die Zuführleitung 137 über die Wärmenutzungsanlage 229 und zurück über die Rückführleitung 139 bei entsprechender Stellung der Absperrventile 231 in den ersten Abwassersammelbehälter 223 zurückgeführt. Dabei entzieht die Wärmenutzungsanlage 229 thermische Energie aus dem im Kreislauf geführten Abwasser solange, bis im ersten Abwassersammelbehälter 223 eine Abwassertemperatur von 8°C vorliegt.

Während das Abwasser des ersten Abwassersammelbehälters 223 im Kreislauf über die Wärmenutzungsanlage 229 geführt wird, wird wie vorstehend beschrieben solange Abwasser aus den Sammelkammern 115 der Kanalschächte 201 bis 209 entnommen, bis der zweite Abwassersammelbehälter 224 gefüllt ist.

Beim Erreichen einer Abwassertemperatur von 8°C im ersten Abwassersammelbehälter 223 wird automatisch mittels einer nicht gezeigten Regeleinrichtung auf die Beschickung der Wärmenutzungsanlage 229 aus dem zweiten Abwassersammelbehälter 224 umgestellt und das Abwasser des zweiten Abwassersammelbehälters 224 wiederum im Kreislauf über die Wärmenutzungsanlage 229 geführt. Während der Beschickung mit dem Abwasser des zweiten Abwassersammelbehälters 224 wird das abgekühlte Abwasser im ersten Abwassersammelbehälter 223 zurück in einem der Kanalschächte 201 bis 209 gefördert. Nach Entleeren des ersten Abwassersammelbehälters 223 wird dieser wiederum mit entnommenem Abwasser aus den Kanalschächten 201 bis 209 wie vorstehend beschrieben befüllt. Sobald durch die Wärmenutzungsanlage 229 das Abwasser im zweiten Abwassersammelbehälter 224 auf eine Abwassertemperatur von 8°C abgekühlt hat, wird wiederum durch die nicht gezeigte Regeleinrichtung auf eine Beschickung der Wärmenutzungsanlage 229 aus dem ersten Abwassersammelbehälter 223 umgestellt, währenddessen der zweite Abwassersammelbehälter 224 wieder für ein Rückspülen einer der Sammelkammern 115 und eines der Entnahmegerinne 113 einer der angeschlossenen Kanalschächte 201 bis 209 entleert und anschließend wieder gefüllt wird.

Somit werden eine Abwasserwärmenutzungsvorrichtung und ein Verfahren zum Nutzen von Abwasserwärme bereitgestellt, welche flexibel an die vorhandene Infrastruktur und den Betrieb der Wärmenutzungsanlage anpassbar sind.

### Bezugszeichenliste

- 100: Abwasserwärmenutzungsanlage
- 101: Kanalschacht
- 103: Schachtabdeckung
- 105: Schachthals
- 107: Schachtring
- 109: Auftritt
- 111: Abwasserrohr
- 113: Entnahmegerinne
- 114: Öffnung
- 115: Sammelkammer
- 117: Förder- und Rückspülleitung
- 119: Be- und Entlüftung
- 121: Saug-/Druckpumpe
- 123: Abwassersammelbehälter
- 129: Wärmepumpe mit integriertem Wärmeübertrager
- 131: erstes Absperrventil
- 133: zweites Absperrventil
- 135: drittes Absperrventil
- 137: Zuführleitung
- 139: Rückführleitung
- 141: Be- und Entlüftungsventil
- 143: Be- und Entlüftungsleitung
- 145: Staurohr
- 147: automatisches Ventil
- 149: Rückschlagklappe
- 200: Abwasserwärmenutzungsvorrichtung
- 201: erster Kanalschacht
- 203: zweiter Kanalschacht
- 205: dritter Kanalschacht
- 207: vierter Kanalschacht
- 209: fünfter Kanalschacht
- 211: Sammler
- 217: PE-HD Druckleitung
- 221: erste Saug-/Druckpumpe
- 222: zweite Saug-/Druckpumpe
- 223: erster Abwassersammelbehälter
- 224: zweiter Abwassersammelbehälter
- 229: Wärmenutzungsanlage
- 231: Absperrventile
- 233: Gebäude mit Heizzentrale

## Patentansprüche

1. Abwasserwärmenutzungsvorrichtung zum Nutzen von Abwasserwärme aus Abwasserkanälen, wobei die Abwasserwärmenutzungsvorrichtung (100, 200) einen Kanalschacht (101, 201, 203, 205, 207, 209) mit einem Gerinne (111, 211), einen Sammelraum (115), eine Fördereinrichtung (121, 221, 222), einen Speicherbehälter (123, 223, 224) und eine Rohrleitung (117, 137, 139) aufweist, und der Abwasserwärmenutzungsvorrichtung eine Wärmenutzungseinrichtung (129, 229) zuordenbar ist, **dadurch gekennzeichnet, dass** die Abwasserwärmenutzungsvorrichtung eine Entnahmeeinrichtung (113) zum Entnehmen und zum Überführen von Abwasser aus dem Gerinne in den Sammelraum aufweist, wobei die Entnahmeeinrichtung als ein Teilstück des Gerinnes innerhalb des Kanalschachtes angeordnet ist, sodass im wesentlichen ein freier Querschnitt des Gerinnes erhalten bleibt und im Kanalschacht Abwasser über die Entnahmeeinrichtung zum Sammelraum und vom Sammelraum durch die Rohrleitung mittels der Fördereinrichtung zum Speicherbehälter und/oder über die Wärmenutzungseinrichtung förderbar ist.

2. Abwasserwärmenutzungsvorrichtung nach Anspruch 1, **dadurch gekennzeichnet, dass** die Entnahmeeinrichtung mehrere Öffnungen (114) und/oder einen Partikelabweiser aufweist.

3. Abwasserwärmenutzungsvorrichtung nach einem der vorherigen Ansprüche, **dadurch gekennzeichnet, dass** die Entnahmeeinrichtung einen Innendurchmesser im Bereich von 100mm bis 1.200mm, bevorzugt von 200mm bis 600mm aufweist.

4. Abwasserwärmenutzungsvorrichtung nach einem der vorherigen Ansprüche, **dadurch gekennzeichnet, dass** die Abwasserwärmenutzungsvorrichtung einen zweiten Speicherbehälter, eine zweite Fördereinrichtung, eine zweite Rohrleitung (217) und/oder weitere Rohrleitungen, Regel- und/oder Absperrorgane und/oder eine Steuer- und/oder Regeleinrichtung aufweist, sodass ein kontinuierlicher Betrieb der Wärmenutzungseinrichtung realisierbar ist.

5. Abwasserwärmenutzungsvorrichtung nach einem der vorherigen Ansprüche, **dadurch gekennzeichnet, dass** die Abwasserwärmenutzungsvorrichtung eine Rückspüleinrichtung aufweist, sodass die Entnahmeeinrichtung rückspülbar ist und/oder Ablagerungen im Sammelraum in das Gerinne rückspülbar sind.

6. Abwasserwärmenutzungsvorrichtung nach einem der vorherigen Ansprüche, **dadurch gekennzeichnet, dass** die Fördereinrichtung (221, 222) mittels einer Umschalteinrichtung zur Saugförderung oder Druckdruckförderung betreibbar ist.

7. Abwasserwärmenutzungsvorrichtung nach einem der vorherigen Ansprüche, **dadurch gekennzeichnet, dass** die Abwasserwärmenutzungsvorrichtung ein automatisches Ventil (147) und/oder mindestens ein Rückschlagventil (149 aufweist.

8. Abwasserwärmenutzungsvorrichtung nach einem der vorherigen Ansprüche, **dadurch gekennzeichnet, dass** die Abwasserwärmenutzungsvorrichtung einen zweiten Kanalschacht, eine zweite Entnahmeeinrichtung und einen zweiten Sammelraum und/oder einen dritten Kanalschacht, eine dritte Entnahmeeinrichtung und einen dritten Sammelraum, einen vierten Kanalschacht, eine vierte Entnahmeeinrichtung und einen vierten Sammelraum und/oder einen weiteren Kanalschacht, eine weitere Entnahmeeinrichtung und einen weiteren Sammelraum aufweist.

9. Abwasserwärmenutzungsvorrichtung nach einem der vorherigen Ansprüche, **dadurch gekennzeichnet, dass** die Abwasserwärmenutzungsvorrichtung die Wärmenutzungseinrichtung aufweist.

10. Abwasserwärmenutzungsvorrichtung nach Anspruch 7, **dadurch gekennzeichnet, dass** die Wärmenutzungseinrichtung eine Wärmepumpe mit integriertem Wärmeübertrager (129) ist.

11. Abwasserwärmenutzungssystem, **gekennzeichnet durch** mehrere Abwasserwärmenutzungsvorrichtungen nach einem der Ansprüche 1 bis 10.

12. Verfahren zum Nutzen von Abwasserwärme aus Abwasserkanälen mittels einer Abwasserwärmenutzungsvorrichtung nach einem der Ansprüche 1 bis 10 oder eines Abwasserwärmenutzungssystems nach Anspruch 11, **gekennzeichnet durch** folgende Schritte:
- Entnehmen von Abwasser aus dem Gerinne innerhalb des Kanalschachtes und Überführen in den Sammelraum mittels der Entnahmeeinrichtung,
- Fördern des überführten Abwassers aus dem Sammelraum mittels der Fördereinrichtung in den Speicherbehälter,
- Fördern des Abwassers aus dem Speicherbehälter über die Wärmenutzungseinrichtung zum Entnehmen von thermischer Energie aus dem Abwasser und
- Rückführen des abgekühlten Abwassers in das Gerinne und/oder Rückspülen der Entnahmeeinrichtung mit dem abgekühlten Abwasser und/oder Rückspülen von Ablagerungen im Sammelraum mit dem abgekühlten Abwasser in das Gerinne.

13. Verfahren zum Austausch oder Nachrüsten eines bestehenden Kanalschachtes zu einer Abwasserwärmenutzungsvorrichtung nach einem der Ansprüche 1 bis 10, **gekennzeichnet durch** folgende Schritte:
- Austauschen des bestehenden Kanalschachtes durch einen Kanalschacht der Abwasserwärmenutzungsvorrichtung mit einem Gerinne, einem Sammelraum, einer Fördereinrichtung, einem Speicherbehälter, einer Rohrleitung und einer Entnahmeeinrichtung oder
- Entfernen eines Bodens des bestehenden Kanalschachtes und/oder Ausschachten eines Erdreiches unterhalb des Bodens des bestehenden Kanalschachtes und Einsetzen eines Kanalschachtes der Abwasserwärmenutzungsvorrichtung innerhalb des bestehenden Kanalschachtes und
- Verbinden des Sammelraums über die Rohrleitung zum Fördern von überführtem Abwasser aus dem Sammelraum mit einem Speicherbehälter und/oder einer Wärmenutzungseinrichtung, sodass eine Abwasserwärmenutzungsvorrichtung nach einem der Ansprüche 1 bis 10 ausgebildet ist.
